# EUROPÄISCHE PATENTSCHRIFT

(11) **EP 2 104 831 B1**
(45) Veröffentlichungstag und Bekanntmachung des Hinweises auf die Patenterteilung: **10.03.2010**
(21) Anmeldenummer: 07722483.0
(22) Anmeldetag: 30.05.2007
(51) Int. Cl.: G01B 5/02, G01B 7/02, G01B 11/02, B23D 21/00

(54) **MESSVORRICHTUNG FÜR MEHRERE ROHRABSCHNITTE**
MEASURING DEVICE FOR A PLURALITY OF TUBULAR SECTIONS
DISPOSITIF DE MESURE SERVANT À MESURER PLUSIEURS SECTIONS DE TUYAU

(30) Priorität: 30.05.2006 DE 102006025506
(43) Veröffentlichungstag der Anmeldung: 30.09.2009
(73) Patentinhaber: Rattunde & Co GmbH, 19288 Ludwigslust (DE)
(72) Erfinder: RATTUNDE, Ulrich, 19322 Bentwisch (DE)
(74) Vertreter: Groth, Wieland
(86) Internationale Anmeldenummer: PCT/DE2007/000968
(87) Internationale Veröffentlichungsnummer: WO 2007/137567

(56) Entgegenhaltungen:
- DE-A1- 1 798 424
- DE-B- 1 056 857
- DE-U- 1 968 351

## Beschreibung

Die Erfindung betrifft eine Messvorrichtung und ein Verfahren zur gleichzeitigen Prüfung der Länge von wenigsten zwei im Wesentlichen gleich langen abgelängten Abschnitten eines stangenförmigen Profilmaterials.

Messvorrichtungen und Verfahren zur Messung von Abschnitten eines stangenförmigen Profilmaterials werden insbesondere als Bauteile integrierter Sägeanlagen verwendet. Moderne integrierte Sägeanlagen ermöglichen die Bearbeitung von Rohren durch eine Vielzahl von nacheinander ausgeführten Bearbeitungsschritten. Es ist bekannt, stangenförmiges Profilmaterial, insbesondere Rohre, zunächst abzulängen und dann durch Anfasen, Waschen und Entgraten weiterzuverarbeiten.

Problematisch bei den bekannten integrierten Sägeanlagen ist die hohe Präzisionsanforderung an die abgelängten Rohrabschnitte bei hoher zu vermessender Stückzahl pro Zeiteinheit. Es ist notwendig, Rohre, insbesondere Metallrohre, mit einer Genauigkeit von 0,1 mm abzulängen und diese Genauigkeit mit einer Wahrscheinlichkeit von 99,99 % einzuhalten. Dabei sollten durch eine integrierte Sägeanlage mehrerer tausend Abschnitte pro Stunde abgelängt werden. Die abgelängten Abschnitte werden durch eine Messvorrichtung gemessen. Auch diese Prüfung muss die genannte Genauigkeit und Stückzahl ermöglichen.

Messvorrichtungen und Verfahren zur Messung von Abschnitten eines stangenförmigen Profilmaterials sind in DE 1056857, DE 1968351U und DE 1798424 offenbart.

Es ist Aufgabe der Erfindung, eine Messvorrichtung zur Verfügung zu stellen, die eine Prüfung der Länge von abgelängten Abschnitten eines stangenformigen Profilmaterials gestattet, sowie ein Verfahren zur Verfugung zu stellen, das die Prüfung der Länge der Abschnitte eines stangenformigen Profilmaterials ermöglicht.

Hinsichtlich der Vorrichtung wird die Aufgabe durch eine Messvorrichtung mit den Merkmalen des Anspruchs 1 erfüllt.

Die Erfindung macht von der Tatsache Gebrauch, dass zur Erreichtung einer hinreichend hohen Messgeschwindigkeit, eine Messvorrichtung zur Verfügung gestellt wird, die die gleichzeitige Messung von wenigstens zwei, vorzugsweise mehreren, insbesondere genau vier abgelängten Abschnitten, insbesondere eines Rohres, in einem Messzyklus gestattet.

Zwischen den zwei sich gegenüberliegenden Messschenkeln sind die wenigstens zwei Abschnitte in Längsrichtung zwischen ihrem einen und ihrem andere Ende und in einem in vorgegebener Weise gestapelten Bündel auf einer Aufnahme positionierbar. Dabei ist die Aufnahme so ausgebildet, dass eine bestimmte Anzahl von Abschnitten sich durch die Wirkung der Schwerkraft bei jedem Beladevorgang in die gleiche relative Anordnung zu einem gleichen Bündel stapelt.

An den einander zugewandten Innenseiten der Messschenkel ist wenigstens ein Messstempel angeordnet. Jedem Abschnitt kann genau ein Messstempel zugeordnet sein, so dass gleichzeitig alle Abschnitte eines Bündels messbar sind.

Erfindungsgemäß ist der Relativabstand der beiden Messschenkel, z.B. mittels einer Verfahreinrichtung veränderbar. Vorzugsweise ist genau einer der Messschenkel, ggf. sind beide Messschenkel gegeneinander, verfahrbar. Vor Durchführung der eigentlichen Prüfung der wenigstens zwei Abschnitte sind die beiden Messschenkel voneinander weg verfahren, und während der Prüfung sind die beiden Messschenkel zueinander hin verfahren und ihre beiden Innenseiten nehmen vorzugsweise genau den Abstand der längsten zu prüfenden Abschnittslänge des Bündels an. Nach der Messung sind die beiden Messschenkel wieder voneinander weg verfahren. Dadurch wird das Beladen der Aufnahme mit dem Bündel erleichtert.

Wenigstens einer der beiden Messschenkel weist mindestens einen in Längsrichtung ausgerichteten Messstempel auf, der derart an der Innenseite des Messschenkels angeordnet ist, dass er nach dem Verfahrvorgang mit genau einem Abschnittsende in Kontakt gerät, so dass genau ein Abschnitt durch den einen Messstempel prüfbar ist. Mit dem Messstempel sind geringe Differenzen der Länge der Abschnitte, bis in den Bereich von 0,01 mm, messbar. Unter Kontakt wird hier nicht nur eine Berührung, sondern auch eine berührungslose Messung, beispielsweise eine Messung durch einen Abtaststrahl verstanden.

Vorteilhafterweise entspricht die Anzahl der Messstempel der Anzahl der abgelängten Abschnitte eines zu prüfenden Bündels. So ist es möglich, jeden der in der Aufnahme positionierten Abschnitte in seiner Länge durch jeweils genau einen der zugeordneten Messstempel zu prüfen. Die relative Anordnung der Messstempel ist dabei konstant und konstruktiv durch die Anordnung der Abschnitte im Bündel bestimmt.

Die Messstempel sind günstigenfalls alle an einer Innenseite des einen Messschenkels vorgesehen, der zusätzlich verfahrbar ist. Vorteilhafterweise wird damit eine kurze Verkabelung ermöglicht. Die Verfahreinrichtung kann auch an dem einen Messschenkel vorgesehen sein und damit zusätzlich eine kurze Verkabelung ermöglichen. Zur Bestimmung der Länge der Verfahrstrecke ist in dieser Ausführungsform der Erfindung ein Messsystem an dem einen Messschenkel vorgesehen.

Ein Ende des Abschnitts drückt während der Messung gegen jeweils genau einen Messstempel, so dass gleichzeitig mehrere Abschnitte individuell vermessen werden können.

Jeder der Messstempel kann einen Messkopf umfassen, der zum Kontakt mit dem Abschnitt bestimmt ist und der relativ beweglich zum Messschenkel ausgebildet ist, an dem er angeordnet ist. Der Messkopf ist in Längsrichtung im Messstempel elastisch hin- und her beweglich. Die Bewegung wird von einem induktiven Wegmesssystem im Innern des Messstempels genau gemessen. Die beschriebenen Messstempel sind hinreichend erprobt und haben eine hohe Standzeit.

Vorzugsweise in Kombination mit dem beschrieben Messkopf ist die Innenseite des anderen Messschenkels im Bereich oberhalb der Aufnahme als vollständig gerade Fläche ausgeformt. Sie dient als Anschlag für die anderen Enden der abgelängten Abschnitte. Der andere Messschenkel ist vorzugsweise ortsfest. Durch die ortsfeste und einfache Ausbildung des anderen Messschenkels wird die Messung besonders genau.

Jeder der Abschnitte ist in dieser bevorzugten Weiterbildung der Erfindung während der Messung zwischen den beiden Messschenkeln eingespannt, da er mit dem anderen Ende gegen die gerade Fläche anschlägt und mit dem einen Ende genau einen der elastisch beweglichen Messköpfe unter leichtem Druck berührt.

Vorteilhafterweise wird die Messung dadurch unempfindlich gegen äußere Störungen, wie beispielsweise Stöße.

Mehrere Messstempel sind derart an der Innenseite des vorzugsweise einen Messschenkels angeordnet, dass nach dem Verkürzen des Abstandes der beiden Messschenkel voneinander, jeder Abschnitt mit seinem anderen Abschnittsende an der planen Fläche anliegt und mit seinem einen Abschnittsende an jeweils genau einem zugeordneten Messstempel. Dabei wird ausgeschlossen, dass das eine Abschnittsende mit zwei oder sogar mehr Messstempeln in Kontakt gerät und damit eine individuelle Messung verhindert. Vorzugsweise wird die stabile eins zu eins Anordnung durch eine prismatisch ausgeformte Aufnahme in Verbindung mit einem vorgegebenen Durchmesser quer zur Längsrichtung des abgelängten Abschnitts erreicht. Die prismatisch ausgeformte Aufnahme ist in einem Querschnitt senkrecht zur Längsrichtung im Wesentlichen trichterförmig ausgebildet, so dass auch eine Mehrzahl von sogar im Wesentlichen zufällig in die Aufnahme eingelegten Abschnitten sich selbständig immer wieder in gleicher Weise in Rautenform stapelt. Vorzugsweise sind die vier Messstempel dann im Wesentlichen an den Ecken einer verschoben angeordneten Raute angeordnet. Die vier Messstempel gestatten die individuelle Messung von vier auf einer prismatischen Auflage mit vorgegebenem Winkel positionierten Rohrabschnitten.

In einer besonders bevorzugten Ausführungsform der Erfindung, ist jeder der Messstempel als auch das Messsystem mit einer Auswerteeinheit verbunden, und in der Auswerteeinheit sind Sollwerte der Länge und zulässige Toleranzen der Länge der Abschnitte abgelegt. Die Auswerteeinheit ist mit einer steuerbaren Sortiereinrichtung verbunden, mit der das Bündel insgesamt bei Überschreiten auch nur einer Toleranz der gemessenen Abschnitte aussortierbar ist und bei Einhalten aller Toleranzen einsortierbar ist. In der Auswerteeinheit findet ein üblicher Soll/Ist-Vergleich der Längen statt. Erfindungsgemäß liegt eine besondere Zeitersparnis darin, dass das gesamte Bündel der Rohrabschnitte nicht nur gleichzeitig gemessen sondern auch ggf. aussortiert wird, sobald auch nur eine Messung außerhalb der Toleranz liegt. Das ist ausgesprochen selten der Fall. In dem hier beschriebenen Schneidverfahren liegen etwa 99,994 % der abgelängten Abschnitte innerhalb der Toleranz. Das Bündel wird geschlossen aussortiert. Es bedarf keiner weiteren Behandlung. Damit werden zwar ggf. Rohrabschnitte aussortiert, die eine noch zulässige Länge aufweisen, jedoch hat sich gezeigt, dass das Auseinanderpflücken eines fehlerhaften Bündels insgesamt mehr Zeit und damit Kosten erzeugt, als das vollständige Entsorgen eines gesamten Bündels spart. Es müsste auch eine zusätzliche Gerätschaft oder Steuerung zur Verfügung gestellt werden. Das wurde sich für die beschriebenen geringen Fehlschnitte kaum lohnen.

Hinsichtlich des Verfahrens wird die Aufgabe durch die Merkmale des Anspruchs 11 erfüllt.

Erfindungsgemäß werden in einer Aufnahme zwischen zwei sich gegenüberliegenden Messschenkeln, wenigstens zwei Abschnitte eines stangenförmigen Profilmaterials, insbesondere Rohrabschnitts aus Metall, in Längsrichtung und in einem in vorgegebener Weise gestapelten Bündel positioniert. Dabei ordnen sich die Abschnitte durch die Wirkung der Schwerkraft immer in einer gleichen relativen Position zueinander zu dem Bündel an.

Nach der Positionierung des Bündels wird wenigstens einer der beiden Messschenkel in Richtung des anderen Messschenkels mittels einer Verfahreinrichtung verfahren und die Länge der Verfahrstrecke wird mit einem Messsystem gemessen. Der wenigstens eine Messschenkel wird so weit verfahren, bis der wenigstens eine in Längsrichtung ausgerichtete Messstempel, der an einer der Messschenkelinnenseiten angeordnet ist, mit genau einem Abschnittsende in Kontakt gerät indem er ihn vorzugsweise berührt.

Nachdem der Kontakt jeder der Messstempel mit jeweils einem der Abschnittsenden hergestellt wird, wobei jedem Abschnitt genau ein Messstempel zugeordnet wird, wird die eigentliche Längenmessung durchgeführt, d. h. es werden die Messwerte der Messstempel und des Messsystems in Form von Messdaten an eine Auswerteeinheit geleitet. In der Auswertereinheit sind Daten der Sollwerte der Länge und Daten der Toleranz der Länge der Abschnitte abgelegt und diese werden mit den Messdaten verglichen. Dazu ist der verfahrbare Messschenkel mit dem Messsystem verbunden, das die Verfahrstrecke des Messschenkels gegenüber dem positionsfesten Messschenkel misst und somit über Differenzbildung mit den Messwerten der einzelnen Messstempel eine Längenmessung jedes Abschnittes erlaubt. Wenn die Toleranz durch einen der Messwerte überschritten ist, wird das Bündel insgesamt aussortiert. Bei Einhalten der Toleranzbereiche aller Abschnitte, wird das Bündel einsortiert. Die Auswerteeinheit ist über eine Steuereinrichtung mit einer Sortiereinrichtung, insbesondere in Form eines Greifarms, verbunden, die die Bündel in zugehörige Container einsortiert bzw. aussortiert.

Die Erfindung wird anhand eines Ausführungsbeispiels in zwei Figuren beschrieben. Dabei zeigen:
- Fig. 1: eine schematische Seitenansicht einer erfindungsgemäßen Messvorrichtung,
- Fig. 2: eine schematische Schnittansicht, die entlang der Linie II-II in Fig. 1

Zum Ablängen von Rohrabschnitten 20 von einem Metallrohr ist eine integrierte Rohrschneidemaschine vorgesehen. Die abgelängten Rohrabschnitte 20 werden einer Nachbehandlung durch Anfasen, Entgraten und Waschen unterworfen. Die Kundenanforderungen an die Genauigkeit der Länge der Rohrabschnitte sind hoch. Rohrabschnitte 20 mit einer Länge von beispielsweise 0,5m müssen bei einer Toleranz von 0,1mm eine Prozessfähigkeit von Cₚₖ=1,33 erfüllen. Das heißt mehr als 99,994 % aller Teile liegen dann innerhalb der Toleranz.

Die Rohrabschnitte 20 weisen nach dem Ablängen zwar eine im Wesentlichen gleiche Länge auf. Da jeder Schneidvorgang geringfügigen Ungenauigkeiten unterworfen ist, muss die Länge der Abschnitte nach dem Ablängen aber geprüft werden, um die oben genannten Standards zu gewährleisten.

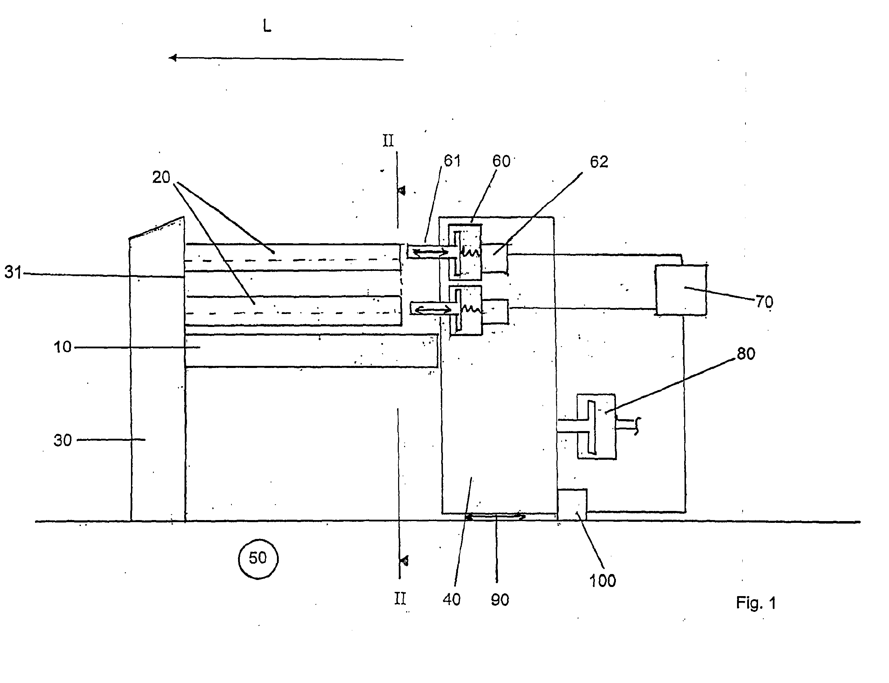

Die Prüfung wird von der in Fig.1 dargestellten erfindungsgemäßen Messvorrichtung durchgeführt. Die Messvorrichtung ist am Ende einer Bearbeitungsstrecke der Rohrschneidemaschine angeordnet. Mittels eines (nicht dargestellten) Greifarmes ist die Messvorrichtung mit Rohrabschnitten 20 beladbar und entladbar. Die Rohrabschnitte 20 können auch als Viererbündel zeitsparend be- und entladen werden.

Die Messvorrichtung weist eine prismatische Aufnahme 10 für vier im Wesentlichen gleichlange Rohrabschnitte 20 auf. Die in Fig. 1 dargestellte Messvorrichtung dient zur Prüfung der Länge der abgelängten Rohrabschnitte 20. Dazu wird ein Bündel von vier jeweils im Wesentlichen gleichlangen Rohrabschnitten 20 auf die im Querschnitt senkrecht zur in Fig.1 dargestellten Ebene prismatisch ausgeformte Aufnahme 10 mittels des Greifarmes positioniert. Die vier Rohrabschnitte 20 sind in Längsrichtung L auf der Aufnahme 10 als Bündel gestapelt. Die gestapelte Anordnung der Rohrabschnitte 20 innerhalb eines Viererbündels ist bei jedem Messzyklus die gleiche. Denn der Winkel der prismatischen Aufnahme sowie der Durchmesser der Rohrabschnitte sind aufeinander abgestimmt und erzwingen so auch beim nur mehr oder weniger exakt wiederholten Beladen der Aufnahme 10 mit vier Rohrabschnitten eine immer gleich bleibende Positionierung der Rohrabschnitte 20 innerhalb des Bündels.

Die Messvorrichtung weist einen gegenüber dem Erdboden 50 oder der Rohrschneidemaschine feststehenden, also positionsfesten Messschenkel 30 und einen gegenüber dem Erdboden 50 verfahrbaren Messschenkel 40 auf. Oberhalb der prismatischen Aufnahme 10 sind am verfahrbaren Messschenkel 40 vier Messstempel 60 vorgesehen. Jeder der Messstempel 60 weist einen in Längsrichtung L elastisch beweglichen Messkopf 61 auf. Die Eindrücktiefe des Messkopfes 61 in den Messstempel 60 wird mittels eines induktiven Wegmesssystems 62 im Messstempel 60 auf 0,001 mm genau gemessen. Jeder der Messstempel 60 ist über eine elektrische Leitung mit einer Auswerteeinheit 70 verbunden.

Bevor das Bündel der Rohrabschnitte 20 auf die Aufnahme 10 gelegt wird, wird der verfahrbare Messschenkel 40 vom ortsfesten Messschenkel 30 weg verfahren. Der Abstand zwischen ortsfestem und verfahrbarem Messschenkel vergrößert sich zur Beladung. Dann wird das Bündel auf die prismatische Auflage 10 gelegt und nachfolgend wird der verfahrbare Messschenkel 50 wieder zum positionsfesten Messschenkel 30 hin verfahren. Durch das Verkürzen des Abstandes der beiden Messschenkel 30, 40 voneinander richten sich die vier Rohrabschnitte 20 fluchtend aus. Der verfahrbare Messschenkel 40 wird so weit zum positionsfesten Messschenkel 30 verfahren, bis alle vier Messköpfe 61 Kontakt mit jeweils einem Ende eines Rohrabschnitts 20 aufgenommen haben und ein anderes Ende jedes Rohrabschnitts 20 an einem ebenen Anschlag 31 des ortsfesten Messschenkels 30 anliegt, und die anderen Enden miteinander fluchten.

Der verfahrbare Messschenkel 50 ist mit einem Antrieb in Form eines pneumatischen Zylinders 80 verbunden. Der pneumatische Zylinder 80 verfährt den verfahrbaren Messstempel 40 auf einer Führung. Die verfahrene Wegstrecke ist mittels eines am verfahrbaren Messschenkel 40 angeordneten Messsystems 100 messbar. Das Messsystem 100 ist ebenfalls elektrisch mit der Auswerteinheit 70 verbunden. Die Kombination der Messwerte des Messsystems 100 und der vier Messstempel 60, gestattet die Berechnung der exakten Länge jedes der in der Aufnahme 10 befindlichen Rohrabschnitts 20.

In der Auswerteeinheit 70 sind Sollwerte der Länge der Rohrabschnitte 20 sowie gestattete Toleranzwerte abgelegt, um die die Solllänge höchstens über- oder unterschritten werden darf. In der Auswerteeinheit 70 werden die vier gemessenen Rohrlängen mit den abgelegten Sollwerten verglichen. Bei Über- bzw. Unterschreiten auch nur eines der vier möglichen Toleranzintervalle eines Rohrabschnitts 20 wird das gesamte Bündel aussortiert. Wenn alle vier Messungen innerhalb des Toleranzintervalls liegen, wird das Bündel einsortiert und zur Weiterverarbeitung ausgeliefert.

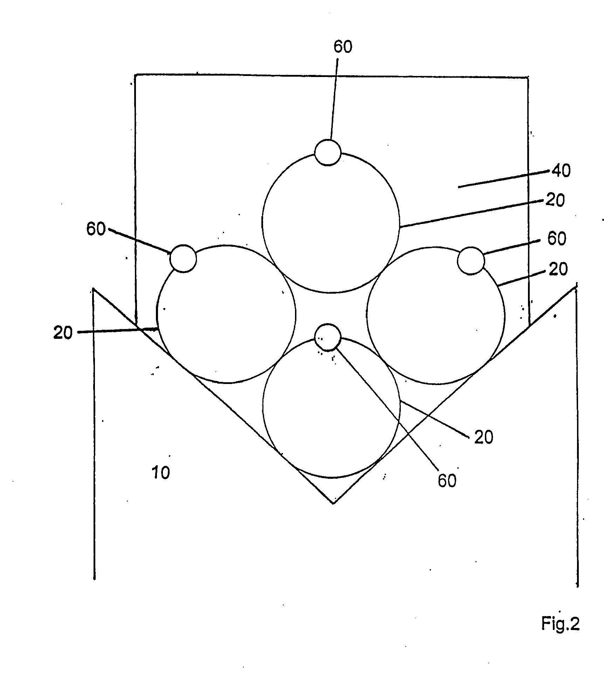

Fig. 2 zeigt in einer Schnittansicht die geometrische Anordnung der vier Messstempel 60 an einer Innenseite des verfahrbaren Messschenkels 40. Die vier Messstempel 60 sind dem Anschlag 31 des ortsfesten Messschenkels 30 zugewandt. Die Anordnung der vier Messstempel 60 ist derart gewählt, dass die vier auf der prismatischen Aufnahme 10 gestapelten Rohrabschnitte 20 mit jeweils genau einem Messstempel 60 in Kontakt geraten, wenn der verfahrbare Messschenkel 40 zum ortsfesten Messschenkel 30 hin verfahren wird. Dadurch ist es möglich, die Länge eines bestimmten Rohrabschnitts 20 durch den ihm zugeordneten Messstempel 60 zu prüfen. Das erfindungsgemäße Messsystem gestattet die Durchführung von 2500 Messzyklen pro Stunde, d. h. der Messung von 10.000 abgelängten Rohrabschnitten pro Stunde. Die Prüfung ist damit ausgesprochen schnell und trotzdem sehr zuverlässig.

### Bezugszeichenliste:

- 10: Aufnahme
- 11: Anspruch
- 20: Rohrabschnitte
- 30: Messschenkel
- 31: ebener Anschlag
- 40: Messschenkel
- 50: Erdboden
- 60: Messstempel
- 61: Messkopf
- 62: induktives Wegmesssystem
- 70: Auswerteeinheit
- 80: pneumatischer Zylinder
- 90: Verfahreinrichtung
- 100: Messsystem

## Patentansprüche

1. Messvorrichtung zur gleichzeitigen Prüfung der Länge von wenigstens zwei im Wesentlichen gleich langen abgelängten Abschnitten (20) eines stangenförmigen Profilmaterials, wobei
zwei sich gegenüberliegende Messschenkel (30, 40), zwischen denen die wenigstens zwei Abschnitte (20) in Längsrichtung (L) nebeneinander und in einem in vorgegebener Weise gestapelten Bündel auf einer Aufnahme (10) positionierbar sind und eine Verfahreinrichtung (90) für wenigstens einen der beiden Messschenkel (30, 40), mit der der Abstand zwischen den beiden Messschenkeln verringerbar ist und ein Messschenkel (30, 40) mindestens einen in Längsrichtung (L) ausgerichteten Messstempel (60) aufweist und jeder der wenigstens zwei Abschnitte (20) nach dem Verringern des Abstandes zwischen den beiden Messschenkeln (30, 40) jeweils mit einem Ende mit genau einem der Messstempel (60) in Kontakt gerät.

2. Messvorrichtung nach Anspruch 1,
**dadurch gekennzeichnet, dass** der wenigstens eine Messstempel (60) relativ zum einen Messschenkel (30, 40) beweglich ist.

3. Messvorrichtung nach Anspruch 1 oder 2,
**dadurch gekennzeichnet, dass** die Anzahl der Messstempel (60) genau der Anzahl der Abschnitte (20) eines Bündels entspricht.

4. Messvorrichtung nach Anspruch 1, 2 oder 3,
**dadurch gekennzeichnet, dass** jedem der wenigstens zwei Abschnitte (20) genau ein Messstempel (60) zugeordnet ist und jeder Abschnitt (20) genau einen der Messstempel (60) nach der Verringerung des Abstandes zwischen den beiden Messschenkeln (30, 40) berührt.

5. Messvorrichtung nach wenigstens einem der vorstehenden Ansprüche,
**dadurch gekennzeichnet, dass** genau einer der beiden Messschenkel (30) ortsfest ist und der wenigstens eine Messstempel (60) an einem verfahrbaren Messschenkel (40) angeordnet ist.

6. Messvorrichtung nach wenigstens einem der vorstehenden Ansprüche,
**dadurch gekennzeichnet, dass** während einer Messung jedes Ende eines Abschnitts (20) entweder genau einen der Messstempel (60) oder eine Innenseite eines Messschenkels (30, 40) berührt.

7. Messvorrichtung nach Anspruch 6,
**dadurch gekennzeichnet, dass** die Messstempel (60) derart an einer Innenwandung eines Messschenkels (30, 40) angeordnet sind, dass eine Stirnseite einer Rohrwandung eines gestapelten Bündels genau einen der Messstempel (60) während der Messung berührt.

8. Messvorrichtung nach wenigstens einem der vorstehenden Ansprüche,
**dadurch gekennzeichnet, dass** die Aufnahme (10) prismatisch ausgeformt ist und zur Aufnahme von gleichzeitig vier Abschnitten (20) vorgesehen ist, die in einem Querschnitt senkrecht zur Längsrichtung rautisch angeordnet sind und einer der Messschenkel (30, 40) vier Messstempel (60) aufweist, die im Wesentlichen auch an den Ecken einer Raute angeordnet sind und die beiden Rauten gegeneinander verschoben sind.

9. Messvorrichtung nach wenigstens einem der vorstehenden Ansprüche,
**dadurch gekennzeichnet, dass** an dem verfahrbaren Messschenkel (40) ein Messsystem zur Erfassung der Länge der verfahrenen Strecke vorgesehen ist und an jedem der Messstempel (60) jeweils ein eine Relativbewegung zwischen dem Messstempel (60) und dem zugeordneten Messschenkel (30, 40) erfassendes Wegmesssystem vorgesehen ist

10. Messvorrichtung nach Anspruch 9,
**dadurch gekennzeichnet, dass** jedes der Wegmesssysteme der Messstempel (60) und das Messsystem (100) mit einer Auswerteeinheit (70) verbunden sind und in der Auswerteeinheit (70) Sollwerte der Länge und Toleranzen der Länge der Abschnitte (20) abgelegt sind und **gekennzeichnet durch** eine ansteuerbare Sortiereinrichtung mit der das Bündel insgesamt bei Überschreiten einer Toleranz ist und bei Einhalten aller Toleranzen einsortierbar ist.

11. Verfahren zur gleichzeitigen Prüfung der Länge von wenigstens zwei im Wesentlichen gleich langen abgelängten Abschnitten (20) eines stangenförmigen Profilmaterials mit einer Messvorrichtung nach wenigstens einem der vorstehenden Ansprüche, indem die wenigstens zwei Abschnitte (20) in Längsrichtung (L) nebeneinander und in vorgegebener Weise in einem Bündel auf einer Aufnahme (10) zwischen zwei sich gegenüberliegenden Messschenkeln (30, 40) gestapelt werden,
der Abstand zwischen den beiden Messschenkeln (30, 40) mittels einer Verfahreinrichtung (90) für wenigstens einen der beiden Messschenkel (30, 40) verringert wird, bis jeder der wenigstens zwei Abschnitte (20) mit einem Ende mit genau einem in Längsrichtung (L) ausgerichteten relativ zum einen Messschenkel (30, 40) beweglichen und an ihm angeordneten Messstempel (60) und mit einem anderen Ende mit dem anderen Messschenkel (40) in Kontakt gerät, und
gleichzeitig Messdaten von wenigstens zwei Messstempeln (30, 40) für die wenigstens zwei Abschnitte (20) ausgewertet werden.

12. Verfahren nach Anspruch 11,
**dadurch gekennzeichnet, dass** Messdaten eines Messsystems (100) für eine Verfahrstrecke des Messschenkels (30, 40) ermittelt werden und Messdaten von Wegmesssystems der wenigstens zwei Messstempel (60) ermittelt werden.

13. Verfahren nach Anspruch 11 oder 12,
**dadurch gekennzeichnet, dass** die Messdaten einer Auswerteeinheit (70) zuführt werden,
in der Auswerteeinheit (70) abgelegte Daten der Sollwerte der Länge und der Toleranzen der Länge jeder der Abschnitte (20) mit den Messdaten verglichen werden,
eine Sortiereinrichtung angesteuert wird, und das Bündel insgesamt bei Überschreiten der Toleranz eines Abschnitts (20) aussortiert wird und bei Einhalten aller Toleranzen einsortiert wird.

## Claims

1. A measuring apparatus for simultaneously checking the length of at least two portions (20) - cut to length and of substantially equal length - of a rod-shaped profile material, wherein two mutually opposed measuring arms (30, 40), between which the at least two portions (20) are capable of being positioned adjacent to each other in the longitudinal direction (L) and in a bundle stacked in a pre-determined manner on a receiving means (10) and a displacement device (90) for at least one of the two measuring arms (30, 40), by which displacement device (90) the distance between the two measuring arms is capable of being reduced and one measuring arm (30, 40) has at least one measuring ram (60) orientated in the longitudinal direction (L) and each of the at least two portions (20) after the reduction of the distance between the two measuring arms (30, 40) comes into contact at one end in each case with precisely one of the measuring rams (60).

2. A measuring apparatus according to Claim 1, **characterized in that** the at least one measuring ram (60) is movable relative to one measuring arm (30, 40).

3. A measuring apparatus according to Claim 1 or 2, **characterized in that** the number of the measuring rams (60) corresponds precisely to the number of the portions (20) of a bundle.

4. A measuring apparatus according to Claim 1, 2 or 3, **characterized in that** each of the at least two portions (20) has precisely one measuring ram (60) associated with it, and each portion (20) touches precisely one of the measuring rams (60) after the reduction of the distance between the two measuring arms (30, 40).

5. A measuring apparatus according to at least one of the preceding Claims, **characterized in that** precisely one of the two measuring arms (30) is stationary and the at least one measuring ram (60) is arranged on a displaceable measuring arm (40).

6. A measuring apparatus according to at least one of the preceding Claims, **characterized in that** during a measurement each end of a portion (20) touches either precisely one of the measuring rams (60) or an inner side of a measuring arm (30, 40).

7. A measuring apparatus according to Claim 6, **characterized in that** the measuring rams (60) are arranged on an inner wall of a measuring arm (30, 40) in such a way that an end face of a tube wall of a stacked bundle touches precisely one of the measuring rams (60) during the measurement.

8. A measuring apparatus according to at least one of the preceding Claims, **characterized in that** the receiving means (10) is shaped in the form of a prism and is provided for receiving four portions (20) simultaneously which are arranged in the shape of a rhombus in a cross-section at a right angle to the longitudinal direction, and one of the measuring arms (30, 40) has four measuring rams (60) which are also arranged substantially at the corners or a rhombus and the two rhombi are displaced towards each other.

9. A measuring apparatus according to at least one of the preceding Claims, **characterized in that** a measuring system for detecting the length of the path travelled is provided on the displaceable measuring arm (40), and a path-measuring system detecting a relative movement between the measuring ram (60) and the associated measuring arm (30, 40) is provided in each case on each of the measuring rams (60).

10. A measuring apparatus according to Claim 9, **characterized in that** each of the path-measuring systems of the measuring rams (60) and the measuring system (100) are connected to an evaluation unit (70), and nominal values of the length and tolerances of the length of the portions (20) are stored in the evaluation unit (70), and **characterized by** a sorting device which is capable of being actuated and by which the bundle as a whole is capable of being rejected if a tolerance is exceeded and is capable of being accepted if all the tolerances are observed.

11. A method of simultaneously checking the length of at least two portions (20) - cut to length and of substantially equal length - of a rod-shaped profile material, with a measuring apparatus according to at least one of the preceding Claims, in which the at least two portions (20) are stacked adjacent to each other in the longitudinal direction (L) and in a bundle in a pre-determined manner on a receiving means (10) between two opposed measuring arms (30, 40), the distance between the two measuring arms (30, 40) is reduced by means of a displacement device (90) for at least one of the two measuring arms (30, 40), until each of the at least two portions (20) comes into contact at one end with precisely one measuring ram (60) - orientated in the longitudinal direction (L) and movable relative to one measuring arm (30, 40) and arranged on the latter - and at another end with the other measuring arm (40), and at the same time measurement data of at least two measuring rams (30, 40) [sic] are evaluated for the at least two portions (20).

12. A method according to Claim 11, **characterized in that** measurement data of a measuring system (100) are determined for a displacement path of the measuring arm (30, 40), and measurement data of path-measuring system[s] of the at least two measuring rams (60) are determined.

13. A method according to Claim 11 or 12, **characterized in that** measurement data are supplied to an evaluation unit (70), data - stored in the evaluation unit (70) - of the nominal values of the length and the tolerances of the length of each of the portions (20) are compared with the measurement data, a sorting device is actuated, and the bundle as a whole is rejected if a tolerance of a portion (20) is exceeded and is accepted if all the tolerances are observed.

## Revendications

1. Dispositif de mesure pour le contrôle simultané des longueurs d'au moins deux sections allongées (20) essentiellement égales d'un matériau profilé en forme de tige, dans lequel :
- deux branches de mesure (30, 40) se font face avec, entre elles, les sections (20) au nombre de deux au moins, qui sont disposées côte à côte et orientées en direction longitudinale (L) et peuvent être positionnées sous la forme d'un faisceau empilé de manière prédéfinie sur un réceptacle (10),
- un dispositif de déplacement (90) pour au moins une des deux branches de mesure (30, 40), permet de réduire la distance entre ces branches dont l'une présente au moins un tampon de mesure (60) orienté selon la direction longitudinale (L),
- chacune des sections (20) au nombre de deux au moins, après réduction de la distance séparant les deux branches de mesure (30, 40), vient en contact par une extrémité précisément avec un des tampons de mesure (60).

2. Dispositif de mesure selon la revendication 1, **caractérisé en ce qu'**au moins un tampon de mesure (60) peut se déplacer par rapport à une branche de mesure (30, 40).

3. Dispositif de mesure selon la revendication 1 ou 2, **caractérisé en ce que** le nombre de tampons de mesure (60) correspond précisément au nombre des sections (20) d'un faisceau.

4. Dispositif de mesure selon la revendication 1, 2 ou 3, **caractérisé en ce qu'**à chacune des sections (20) au nombre de deux au moins est affecté un tampon de mesure (60) et que chaque section (20) est en contact précisément avec un des tampon de mesure (60) après réduction de la distance séparant les deux branches de mesure (30, 40).

5. Dispositif de mesure selon une des revendications précédentes, **caractérisé en ce qu'**une des deux branches de mesure (30) est fixe et qu'au moins un tampon de mesure (60) est monté sur une branche de mesure (40) mobile.

6. Dispositif de mesure selon une des revendications précédentes, **caractérisé en ce que** pendant une mesure, chaque extrémité d'une section (20) est en contact avec soit un des tampons de mesure (60), soit une face interne d'une branche de mesure (30, 40).

7. Dispositif de mesure selon la revendication 6, **caractérisé en ce que** les tampons de mesure (60) sont disposés sur une paroi interne d'une branche de mesure (30, 40) de manière qu'une face frontale d'une paroi tubulaire d'un faisceau empilé est précisément en contact, pendant la mesure, avec un tampon de mesure (60).

8. Dispositif de mesure selon une des revendications précédentes, **caractérisé en ce que** le réceptacle (10) a une forme prismatique et est prévu pour accueillir simultanément quatre sections (20) qui, en coupe perpendiculaire à la direction longitudinale, sont disposées en losange, une des branches de mesure (30, 40) présentant quatre tampons de mesure (60), qui sont également disposés essentiellement aux sommets d'un losange, avec coulissement des deux losanges l'un par rapport à l'autre.

9. Dispositif de mesure selon une des revendications précédentes, **caractérisé en ce que** la branche de mesure (40) mobile porte un système de mesure pour saisir la longueur du trajet parcouru et que sur chaque tampon de mesure (60) est prévu un système de mesure de course qui saisit le déplacement relatif du tampon de mesure (60) et de la branche de mesure (30, 40) qui lui est associée.

10. Dispositif de mesure selon la revendication 9, **caractérisé en ce que** chaque système de mesure de course du tampon de mesure (60) et le système de mesure (100) sont reliés à une unité d'évaluation (70) dans laquelle sont déposées les valeurs de consigne concernant la longueur et les tolérances de longueur des sections (20), et qu'il existe un dispositif de triage commandable par lequel le faisceau peut à la fois être écarté quand les tolérances sont dépassées et classé quand elles sont respectées.

11. Procédé pour le contrôle simultané des longueurs d'au moins deux sections allongées (20) essentiellement égales d'un matériau profilé en forme de tige, au moyen d'un dispositif de mesure selon au moins une des revendications précédentes, procédé selon lequel les sections (20) au nombre de deux au moins, sont orientées en direction longitudinale en étant empilées côte à côte de manière prédéfinie sous la forme d'un faisceau dans un réceptacle (10) entre deux branches de mesure (30, 40) qui se font face et dont la distance les séparant peut être réduite par l'intermédiaire d'un dispositif de déplacement (90) agissant sur au moins une des deux branches de mesure (30, 40) jusqu'à ce que chacune des sections (20) au nombre de deux au moins vienne par une extrémité en contact précisément avec un tampon de mesure (60) monté mobile en direction longitudinale (L) par rapport à une branche de mesure (30, 40) sur laquelle il est monté, et par l'autre extrémité avec l'autre branche de mesure (40), tandis qu'en même temps sont évaluées des données de mesure qui proviennent des deux branches de mesure (30, 40) et qui concernent les sections (20) au nombre de deux au moins.

12. Procédé selon la revendication 11, **caractérisé en ce que** sont établies les données de mesure d'un système de mesure (100) pour un trajet de déplacement de la branche de mesure (30, 40) et également les données de mesure d'un système de mesure de course des branches de mesure (60) au nombre de deux au moins.

13. Procédé selon la revendication 11 ou 12, **caractérisé en ce que** :
- les données de mesure sont adressées à une unité d'évaluation (70),
- les données déposées dans l'unité d'évaluation (70) et concernant les valeurs de consigne de la longueur et des tolérances de chacune des sections (20) sont comparées aux données mesurées,
- un dispositif de triage est commandé et le faisceau est écarté si les tolérances d'une section (20) sont dépassées tandis qu'il est classé si les tolérances sont respectées.
